# EUROPÄISCHE PATENTANMELDUNG

(11) **EP 4 778 682 A1**
(43) Veröffentlichungstag der Anmeldung: **22.07.2026**
(21) Anmeldenummer: 26150655.4
(22) Anmeldetag: 07.01.2026
(51) Int. Cl.: B25J 15/06

(54) **SAUGGREIFER, VERFAHREN ZUM AUSTAUSCHEN EINES ELASTISCHEN DICHTELEMENTS DES SAUGGREIFERS UND VERFAHREN ZUM HERSTELLEN EINES ROTORBLATTS EINER WINDKRAFTANLAGE**

(30) Priorität: 20.01.2025 DE 102025101883
(71) Anmelder: J. Schmalz GmbH, 72293 Glatten (DE)
(72) Erfinder: Bok, Sabine, 72280 Dornstetten (DE)
(74) Vertreter: DREISS Patentanwälte PartG mbB

(57) **Zusammenfassung**

Sauggreifer (10) zum Ansaugen eines Gegenstands mittels Unterdruck, aufweisend: eine Grundplatte (12), ein elastisches Dichtelement (14), das schlaufenförmig ausgebildet ist, und eine Klemm-Einrichtung (16). Das elastische Dichtelement (14) ist mittels der Klemm-Einrichtung (16) lösbar an der Grundplatte (12) befestigt. Das elastische Dichtelement (14) weist eine Faltenbalg-Struktur (40) auf. Die Faltenbalg-Struktur (40) ist dazu ausgebildet, beim Ansaugen des Gegenstands komprimiert zu werden.

## Beschreibung

Die Erfindung betrifft einen Sauggreifer, ein Verfahren zum Austauschen eines elastischen Dichtelements des Sauggreifers und ein Verfahren zum Herstellen eines Rotorblatts einer Windkraftanlage.

Sauggreifer können vorteilhafterweise bei der Herstellung von Windkraftanlagen eingesetzt werden. Dabei ist unter anderem das Heben von länglichen, gewölbten, welligen und rauen Elementen erforderlich. Ein solches Element kann beispielsweise ein Segment, ein Steg, eine Versteifungsrippe oder eine Halbschale eines Rotorblatts der Windkraftanlage sein.

Typischerweise wird ein Rotorblatt aus einem Faser-Kunststoff-Verbund, insbesondere aus einem Epoxidharz-Glasfaserverbund, hergestellt. Dabei werden üblicherweise Segmente, Halbschalen, Stege sowie Versteifungsrippen des Rotorblatts getrennt voneinander hergestellt und anschließend zu dem Rotorblatt zusammengesetzt.

Das Herstellen der Segmente, Halbschalen, Stege und Versteifungsrippen kann dadurch erfolgen, dass die Fasern des Faser-Kunststoff-Verbunds in eine gewünschte Anordnung, beispielsweise unidirektional oder gewebt, gebracht werden, um vorgegebene mechanischen Eigenschaften zu erreichen. Anschließend werden die Fasern mit einer Kunststoffmatrix des Faser-Kunststoff-Verbunds imprägniert oder getränkt und zum Zweck der Formgebung in eine Form gelegt, in der die Kunststoffmatrix aushärtet.

Nach dem Aushärten wird das hergestellte Element aus der Form entnommen und für das Ausführen eines nachfolgenden Bearbeitungsschritts zu einem Arbeitsplatz transportiert. Dabei kommen meistens Sauggreifer zur Anwendung. Ein Sauggreifer für die Herstellung von Windkraftanlagen weist typischerweise einen Schwammgummi oder Schaum für das Kontaktieren des Elements auf. In einem gegriffenen Zustand kann das Element aufgrund eines Unterdrucks in einem Saugraum des Sauggreifers gegen den Schwammgummi oder Schaum gesaugt sein. Dabei soll der Schwammgummi oder Schaum verhindert, dass sich der Unterdruck in dem Saugraum abbaut und das gegriffene Element von dem Sauggreifer löst.

Um den Saugraum sicher und zuverlässig gegenüber der Umgebung des Sauggreifers mittels des Schwammgummis oder Schaums abzudichten, so dass möglichst keine Umgebungsluft in den Saugraum gelangt und den Unterdruck in dem Saugraum abbaut, ist in der Regel eine nahezu vollständige Kompression des Schwammgummis oder Schaums erforderlich. Wenn das Element gewölbt und/oder wellig ist, ist der Schwammgummi oder Schaum häufig lokal nicht vollständig komprimiert. Deshalb gelangt oft Umgebungsluft in den Saugraum, die aufgrund einer ununterbrochenen Beaufschlagung des Sauggreifers mit dem Unterdruck abgesaugt wird.

Folglich ist eine zuverlässige Versorgung des Sauggreifers mit Unterdruck erforderlich, da selbst eine kurzfristige Unterbrechung der Versorgung mit Unterdruck dazu führen kann, dass Umgebungsluft in den Saugraum gelangt, wodurch sich das gegriffene Element ungewollt von dem Sauggreifer löst.

Des Weiteren greifen die Sauggreifer das Element üblicherweise an einer Oberfläche, welche während dem Aushärten die Form nicht kontaktiert, weshalb die Oberfläche meistens relativ rau ist. Deshalb verschleißt der Schwammgummi oder Schaum schnell und muss oft ausgetauscht werden. Da der Schwammgummi oder Schaum typischerweise mittels einer Klebeverbindung befestigt ist, ist das Austauschen des Schwammgummis oder Schaums aufwendig und benötigt viel Zeit.

Der Erfindung liegt die Aufgabe zugrunde, bei Sauggreifern, insbesondere bei Sauggreifern für das Herstellen von Windkraftanlagen, ein zuverlässiges und sicheres Greifen von Gegenständen zu ermöglichen und Kosten zu reduzieren.

Gelöst wird diese Aufgabe durch einen Sauggreifer mit den Merkmalen des Anspruchs 1, durch ein Verfahren mit den Merkmalen des Anspruchs 14 und durch ein Verfahren mit den Merkmalen des Anspruchs 15. Vorteilhafte und bevorzugte Ausgestaltungen der Erfindung sind in den weiteren Ansprüchen enthalten.

Ein erfindungsgemäßer Sauggreifer ist zum Ansaugen, insbesondere zum Greifen, eines Gegenstands mittels Unterdruck geeignet. Der Sauggreifer weist eine, insbesondere ebene, Grundplatte, ein elastisches Dichtelement und eine Klemm-Einrichtung auf. Das elastische Dichtelement ist schlaufenförmig bzw. schleifenförmig ausgebildet. Das elastische Dichtelement kann die Form einer geschlossenen Schlaufe oder Schleife aufweisen. Das elastische Dichtelement ist mittels der Klemm-Einrichtung lösbar an der Grundplatte befestigt. Das elastische Dichtelement weist eine Faltenbalg-Struktur auf. Die Faltenbalg-Struktur ist dazu ausgebildet, beim Ansaugen des Gegenstands komprimiert zu werden.

Die Faltenbalg-Struktur kann ein Ausgleichen von Wellen, Krümmungen oder Unebenheiten des Gegenstands ermöglichen, weshalb der Sauggreifer gewellte, gekrümmte und/oder unebene Gegenstände zuverlässig und sicher greifen kann. Insbesondere kann sich das elastische Dichtelement während dem Ansaugen des Gegenstands durch eine lokal unterschiedliche Kompression der Faltenbalg-Struktur optimal an den Gegenstand anpassen, auch wenn der Gegenstand gewellt, gekrümmt und/oder uneben ist. Dadurch kann der Sauggreifer besonders anpassungsfähig sein und flexibel eingesetzt werden.

Weiter kann die Faltenbalg-Struktur ermöglichen, dass eine Dichtwirkung des elastischen Dichtelements beim Ansaugen des Gegenstands unabhängig von einer Kompression des elastischen Dichtelements ist. Insbesondere können durch die Faltenbalg-Struktur Höhenunterschiede einer Kontaktfläche des Gegenstands ohne Beeinträchtigung einer Abdichtung zwischen dem Gegenstand und dem elastischen Dichtelement ausgeglichen werden. Unter der Kontaktfläche des Gegenstands kann eine Fläche des Gegenstands verstanden werden, die während dem Ansaugen des Gegenstands das elastische Dichtelement kontaktiert.

Auch kann die Faltenbalg-Struktur ermöglichen, dass wenn ein Gegenstand mit dem Sauggreifer angesaugt ist und eine Versorgung des Sauggreifers mit dem Unterdruck ausfällt, die Unterbrechung der Versorgung mit Unterdruck für einen Zeitraum zu überbrücken. Insbesondere kann bei der Unterbrechung der Versorgung mit Unterdruck die Faltenbalg-Struktur sich teilweise entfalten, ohne dass sich der Gegenstand ungewollt von dem Sauggreifer löst. Deshalb können kurzzeitige Unterbrechungen der Versorgung des Sauggreifers mit Unterdruck überbrückt werden.

Zusätzlich kann die Ausgestaltung des Sauggreifers mit der Klemm-Einrichtung und dem schlaufenförmigen Dichtelement ein schnelles, effizientes und unkompliziertes Herstellen des Sauggreifers ermöglichen. Insbesondere kann eine Anzahl von Herstellungsschritten, die für das Herstellen des Sauggreifers erforderlich sind, reduziert werden. Beispielsweise kann das Herstellen einer aufwändigen Klebverbindung für das Befestigen des elastischen Dichtelements an der Grundplatte entfallen. Dadurch kann sich die Herstellung des Sauggreifers vereinfachen, weshalb sich die Herstellungsdauer verkürzt und Herstellungskosten reduziert werden.

Aufgrund der Ausgestaltung des Sauggreifers mit der Klemm-Einrichtung und dem schlaufenförmigen Dichtelement kann auch eine Ausfallzeit des Sauggreifers reduziert werden. Beispielsweise kann nach einem intensiven Gebrauch des Sauggreifers das elastische Dichtelement aufgrund von Verschleiß beschädigt sein, weshalb ein Austausch des elastischen Dichtelements erforderlich ist. Die Klemmen-Einrichtung kann ein schnelles und unkompliziertes Austauschen des elastischen Dichtelements ermöglichen. Dadurch kann erreicht werden, dass eine Dauer für das Austauschen des elastischen Dichtelements, insbesondere Ausfallzeit, sich reduziert und der Sauggreifer schneller einsatzbereit ist. Deshalb können Kosten, die aufgrund des Ausfalls des Sauggreifers entstehen, reduziert werden.

Der Gegenstand kann ein Element einer Windkraftanlage, insbesondere ein Element eines Rotorblatts einer Windkraftanlage, sein. Beispielsweise kann der Gegenstand ein Segment, eine Halbschale, ein Steg oder eine Versteifungsrippe eines Rotorblatts einer Windkraftanlage sein. Der Gegenstand kann aus einem Faser-Kunststoff-Verbund gebildet sein. Vorzugsweise kann der Gegenstand ein glasfaserverstärktes Kunststoffteil sein.

Der Gegenstand kann länglich ausgebildet sein. Der Gegenstand kann eine Länge mit einem Betrag von größer als 10 m (Meter), insbesondere 50 m, 60 m oder 80 m, aufweisen. Der Gegenstand kann eine gewölbte, wellige und/oder raue Oberfläche aufweisen.

Wenn der Sauggreifer den Gegenstand mittels Unterdruck ansaugt, kann der Gegenstand mit einer Saugkraft gegen das elastische Dichtelement gesaugt sein, die größer als ein vorgegebener Wert oder eine Gewichtskraft des Gegenstands ist.

Die Grundplatte und das elastische Dichtelement können zwei voneinander separat ausgebildete Bauteile des Sauggreifers sein. Die Grundplatte kann einteilig ausgebildet sein. Das elastische Dichtelement kann einteilig ausgebildet sein.

Das elastische Dichtelement und/oder die Grundplatte können jeweils als ein werkzeugfallendes Teil ausgebildet sein. Unter einem werkzeugfallenden Teil kann verstanden werden, dass nach dem herstellen des elastischen Dichtelements und/oder der Grundplatte keine Nachbearbeitung erforderlich ist. Insbesondere können das elastische Dichtelement und/oder die Grundplatte in einem einzigen Herstellungsvorgang herstellbar sein. Dadurch können die Herstellungsdauer des Sauggreifers verkürzt und die Herstellungskosten reduziert werden.

Die Grundplatte kann aus einem Metallwerkstoff gebildet sein. Die Grundplatte kann eine Eisenplatte oder eine Aluminiumplatte sein. Die Grundplatte kann plattenförmig, insbesondere eben, ausgebildet sein.

Die Grundplatte kann länglich ausgebildet sein. Die Grundplatte kann sich in einer Längsrichtung, einer Querrichtung und einer Vertikalrichtung erstrecken. Ein Wert einer Länge der Grundplatte in Längsrichtung kann größer sein als ein Wert einer Breite der Grundplatte in Querrichtung und größer sein als ein Wert einer Dicke der Grundplatte in Vertikalrichtung. Der Wert der Breite der Grundplatte in Querrichtung kann größer sein als der Wert der Dicke der Grundplatte in Vertikalrichtung.

Die Breite und/oder die Länge der Grundplatte kann mehr als das fünffache, insbesondere zehnfache, der Dicke der Grundplatte betragen. Die Dicke der Grundplatte kann ein Betrag in einem Bereich von 0,3 cm (Zentimeter) bis 8 cm, insbesondere 0,5 cm bis 3 cm, aufweisen. Vorzugsweise kann die Dicke der Grundplatte 1 cm betragen. Die Länge der Grundplatte kann einen Betrag in einem Bereich von 30 cm bis 100 cm aufweisen. Die Breite der Grundplatte kann einen Betrag in einem Bereich von 5 cm bis 90 cm aufweisen.

Ein Querschnitt der Grundplatte senkrecht zu der Längsrichtung und/oder zu der Querrichtung kann eine rechteckförmige Form aufweisen. Die Grundplatte kann in Bezug auf ihrer Längsachse und/oder Querachse symmetrisch ausgebildet sein.

Eine Form der Grundplatte kann in einer Ebene, die von der Vertikalrichtung und der Querrichtung aufgespannt wird, keine Ecke, insbesondere eine scharfe, spitze oder kantige Ecke, aufweisen. Vorteilhafterweise kann dadurch eine Beschädigung des elastischen Dichtelements reduziert oder ganz verhindert werden.

Die Grundplatte kann, insbesondere in der Ebene, die durch die Längsrichtung und Querrichtung aufgespannt wird, eine ovale Form aufweisen. Die Grundplatte kann, insbesondere in der Ebene, die durch die Längsrichtung und Querrichtung aufgespannt wird, eine Stadionform aufweisen.

Die Grundplatte kann eine Befestigungs-Schnittstelle aufweisen. Die Befestigungs-Schnittstelle kann eine Anzahl, beispielsweise 3, 4, 6 oder 8, von Bohrungen, beispielsweise in Form von Durchgangsbohrungen oder Gewindebohrungen, aufweisen. Die Befestigungs-Schnittstelle kann dazu dienen, den Sauggreifer an einem Manipulator zu befestigen. Der Manipulator kann beispielsweise ein Kran oder ein Roboterarm sein.

Die Grundplatte kann eine Unterdruck-Schnittstelle aufweisen. Die Unterdruck-Schnittstelle kann eine Bohrung, insbesondere eine Durchgangsbohrung oder eine Gewindebohrung, sein. Über die Unterdruck-Schnittstelle kann der Sauggreifer mit dem Unterdruck versorgt, insbesondere beaufschlagt, werden. Insbesondere kann dem Sauggreifer durch die Unterdruck-Schnittstelle der Unterdruck zugeführt werden. Unter Unterdruck kann ein Druck verstanden werden, der niedriger ist als ein Druck einer Umgebung des Sauggreifers.

Die Grundplatte kann eine Saugseite aufweisen, die während dem Ansaugen des Gegenstands dem Gegenstand zugewandt ist. Die Grundplatte kann eine Anschlussseite aufweisen, die während dem Ansaugen des Gegenstands von dem Gegenstand abgewandt ist. Die Anschlussseite und die Saugseite können einander entgegengesetzt ausgerichtet sein. Die Anschlussseite und die Saugseite können jeweils eben ausgebildet sein und parallel zueinander verlaufen. An der Anschlussseite können die Befestigungs-Schnittstelle und/oder die Unterdruck-Schnittstelle angeordnet sein.

Die Grundplatte und das elastische Dichtelement können einen offenen Saugraum definieren. Insbesondere kann das elastische Dichtelement eine Öffnung des Saugraums definieren. Der Saugraum kann dann, wenn der Gegenstand dichtend an dem elastischen Dichtelement anliegt, insbesondere wenn der Gegenstand die Öffnung des Saugraums verschließt, durch die Unterdruck-Schnittstelle evakuiert werden, um den Gegenstand anzusaugen.

Das elastische Dichtelement kann dazu ausgebildet sein, den Gegenstand zu kontaktieren. Das elastische Dichtelement kann als schlaufenförmig geschlossenes Dichtelement ausgebildet sein. Das elastische Dichtelement kann an der Grundplatte, insbesondere unmittelbar, angeordnet sein. Das elastische Dichtelement kann die Grundplatte umlaufend umgeben.

Das elastische Dichtelement kann flexibel, insbesondere dehnbar und/oder stauchbar ausgebildet sein. Vorteilhafterweise kann dadurch das elastische Dichtelement besonders einfach auf die Grundplatte aufgezogen und/oder abgezogen werden.

Das elastische Dichtelement kann dazu ausgebildet sein, an voneinander unterschiedlichen Grundplatten mit gleichem Umfang unter Bildung eines Sauggreifers befestigt zu werden. Die Grundplatten können sich in ihrer Form voneinander unterscheiden. Insbesondere können die Grundplatten sich in ihrer Länge und/oder Breite voneinander unterscheiden. Unter Grundplatten mit gleichem Umfang kann verstanden werden, dass die Beträge der Umfänge der Grundplatten gleich sind. Vorteilhafterweise kann dadurch das elastische Dichtelement für das Herstellen von Sauggreifern unterschiedlicher Formen verwendet werden.

Das elastische Dichtelement ist vorzugsweise nicht aus Schwammgummi oder Schaum gebildet, sondern aus einem anderen Material (z.B. Gummi).

Das elastische Dichtelement kann, insbesondere in der Ebene, die durch die Längsrichtung und Querrichtung aufgespannt wird, eine ovale Form aufweisen. Das elastische Dichtelement kann, insbesondere in der Ebene, die durch die Längsrichtung und Querrichtung aufgespannt wird, eine Stadionform aufweisen.

Die Faltenbalg-Struktur kann eine Anzahl, beispielsweise 1, 2 oder 3, von Falten aufweisen. Die Faltenbalg-Struktur kann zumindest eine Außenfalte und/oder einer Innenfalte aufweisen. Die Falten können, wenn das Dichtelement an der Grundplatte befestigt ist, derart verlaufen, dass die Faltenbalg-Struktur bzw. die Falten in Richtung senkrecht zur Grundplatte komprimierbar sind.

Das elastische Dichtelement kann an einem Rand der Grundplatte, insbesondere umlaufend, angeordnet sein. Der Rand kann auch als Seitenrand, Plattenrand, Kante oder Plattenkante bezeichnet werden. Der Rand kann sich von der Anschlussseite zu der Saugseite erstrecken. Der Rand kann als gerader Rand ausgebildet sein. Das elastische Dichtelement kann an dem Rand aufgezogen sein, z.B. übergestülpt sein.

Das elastische Dichtelement kann eine, insbesondere umlaufende, Vertiefung aufweisen. Die Grundplatte, insbesondere der Rand der Grundplatte, kann in der Vertiefung eingesetzt sein. Dadurch kann die Klemm-Einrichtung in einen gelösten Zustand oder in einen geklemmten Zustand überführt werden, ohne dass das elastische Dichtelement seine Anordnung an der Grundplatte ungewollt verlässt. Weiter kann die Vertiefung die Abdichtung des Saugraums an dem Übergang zwischen der Grundplatte und dem elastischen Dichtelement verbessern.

Die Vertiefung kann in der Art einer umlaufenden Nut in dem schleifenförmigen, elastischen Dichtelement ausgebildet sein. Die umlaufende Nut kann vorzugsweise zu einem inneren Bereich offen sein, der von dem schleifenförmigen elastischen Dichtelement umfangen wird. Insofern kann das Dichtelement vorzugsweise auf einen umlaufenden Rand der Grundplatte aufgezogen werden, indem die umlaufende Nut der Dichtelements über den Rand der Grundplatte gestülpt wird.

Das elastische Dichtelement kann einen ersten Steg und einen zweiten Steg aufweisen, die zwischen sich die Vertiefung bilden, insbesondere definieren. Die beiden Stege können parallel zueinander verlaufen. Der erste Steg kann an der Anschlussseite der Grundplatte angeordnet sein und der zweite Steg kann an der Saugseite der Grundplatte angeordnet sein. Anders formuliert, die Grundplatte kann zwischen den beiden Stegen angeordnet sein. Die Grundplatte kann mittels den beiden Stegen abschnittsweise von dem elastischen Dichtungselement umgriffen sein. Der Rand der Grundplatte kann einem Grund der Vertiefung gegenüberliegend oder zugewandt angeordnet sein.

Ein Einsetzen der Grundplatte in die Vertiefung kann als Aufziehen des elastischen Dichtelements auf die Grundplatte bezeichnet werden.

Die Klemm-Einrichtung kann das elastische Dichtelement mittels einer formschlüssigen Verbindung an der Grundplatte befestigen. Die Klemm-Einrichtung kann dazu ausgebildet sein, das elastische Dichtelement an einem Umfang der Grundplatte lösbar zu befestigen. Mittels der Klemm-Einrichtung kann das elastische Dichtelement austauschbar an der Grundplatte befestigt sein.

Die Klemm-Einrichtung kann einen gelösten Zustand und einen geklemmten Zustand aufweisen. In dem gelösten Zustand kann das elastische Dichtelement an der Grundplatte angeordnet oder von der Grundplatte entfernt oder gelöst werden. In dem geklemmten Zustand kann das elastische Dichtelement nicht von der Grundplatte entfernt oder gelöst werden. Vorteilhafterweise kann dadurch bei einer Beschädigung des elastischen Dichtelements dieses schnell ausgetauscht werden.

In dem geklemmten Zustand kann das elastische Dichtelement zumindest abschnittsweise zwischen der Klemm-Einrichtung und der Grundplatte angeordnet sein. Die Klemm-Einrichtung kann dazu ausgebildet sein, in dem geklemmt Zustand das elastische Dichtelement mit einer Klemmkraft in Richtung der Grundplatte zu beaufschlagen. Durch die Klemmkraft kann das elastische Dichtelement an der Grundplatte befestigt sein. Anders formuliert, in dem geklemmten Zustand drückt oder presst die Klemm-Einrichtung das elastische Dichtelement gegen die Grundplatte.

Der Sauggreifer kann zwischen der Grundplatte und dem elastischen Dichtelement keine Abdichtung aufweisen. Durch die Klemm-Einrichtung kann das elastische Dichtelement derart gegen die Grundplatte gepresst werden, dass der Saugraum an einem Übergang zwischen Grundplatte und elastisches Dichtelement gegenüber der Umgebung abgedichtet ist.

Wie erwähnt kann der Sauggreifer den Saugraum aufweisen. Die Grundplatte und das elastische Dichtelement können den Saugraum zumindest abschnittsweise begrenzen. Insbesondere wenn der Gegenstand angesaugt ist, kann der Saugraum von der Grundplatte, dem elastischen Dichtelement und dem Gegenstand begrenzt sein. Dadurch, dass die Grundplatte den Saugraum zumindest abschnittsweise begrenzt, kann das elastische Dichtelement materialsparend ausgeführt sein.

Die Unterdruck-Schnittstelle kann in den Saugraum münden. Der Saugraum kann mit dem Unterdruck, insbesondere über die Unterdruck-Schnittstelle, beaufschlagt werden.

Wenn der Gegenstand mittels des Sauggreifers angesaugt wird, kann der Gegenstand von dem Sauggreifer gegriffen sein. Wenn der Gegenstand mittels des Sauggreifers nicht angesaugt wird, kann der Gegenstand von dem Sauggreifer nicht gegriffen, insbesondere freigegeben sein.

Zum Ansaugen des Gegenstands kann der Sauggreifer derart an dem Gegenstand angeordnet werden, dass sich zwischen dem Gegenstand und dem Dichtelement ein berührender Kontakt ausbildet. Der Gegenstand kann den Saugraum begrenzen, insbesondere verschließen. Das elastische Dichtelement kann durch den berührenden Kontakt zu dem Gegenstand den Saugraum gegenüber einer Umgebung abdichten. Das Ansaugen des Gegenstands kann durch Beaufschlagen des Saugraums mit dem Unterdruck erfolgen. Durch den Unterdruck wird der Gegenstand gegen das elastische Dichtelement in Richtung der Grundplatte gedrückt. Der Gegenstand kann mittels des Sauggreifers angesaugt sein, wenn die Saugkraft, mit der der Gegenstand gegen das elastische Dichtelement gedrückt wird, größer als ein vorgegebener Wert oder eine Gewichtskraft des Gegenstands ist. Dadurch kann ein an der Befestigungs-Schnittstelle befestigter Manipulator den Sauggreifer zusammen mit dem Gegenstand heben.

Zum Freigeben des angesaugten Gegenstands kann der Saugraum mit einem Druck beaufschlagt werden, der gleich einem Druck der Umgebung des Sauggreifers ist. Dadurch kann der Gegenstand nicht mehr gegen das elastische Dichtelement gesaugt sein. Der Sauggreifer kann von dem Gegenstand gelöst werden.

Ein weiterer Aspekt des Sauggreifers kann sein, dass der Sauggreifer durch das elastische Dichtelement und der Klemm-Einrichtung robust, leicht zu warten und ohne ein Klebeschritt oder ein Vulkanisierschritt herstellbar ist.

Ein weiterer Aspekt des Sauggreifers kann sein, dass der Sauggreifer besonders für die Herstellung von Rotorblättern von Windkraftanlagen geeignet ist, da gewölbte, wellige und gleichzeitig sehr raue Gegenstände mittels des Sauggreifers gehoben werden können.

In einer Weiterbildung des Sauggreifers ist das elastische Dichtelement einteilig ausgebildet. Dadurch kann eine Herstellung des elastischen Dichtelements vereinfacht werden.

In einer Weiterbildung des Sauggreifers ist das elastische Dichtelement nahtlos ausgebildet. Dadurch kann das elastische Dichtelement besonders belastbar ausgebildet sein. Insbesondere kann dadurch eine potentielle Schwachstelle, beispielsweise in Form einer Naht oder Verbindungsstelle, vermieden werden. Anders formuliert, das elastische Dichtelement kann als eine homogene Struktur ausgebildet sein. Eine Naht kann beispielsweise durch das Aneinandergeklebt von zwei Enden eines Dichtelements entstehen, um die Schlaufe des schlaufenförmigen Dichtelements zu bilden.

In einer Weiterbildung des Sauggreifers weist das elastische Dichtelement eine Markierung für das Ausrichten des elastischen Dichtelements relativ zu der Grundplatte auf. Dadurch kann eine einfache und präzise Ausrichtung des elastischen Dichtelements und der Grundplatte zueinander erreicht werden. Weiter können dadurch eine ungleichmäßige Spannungsverteilung innerhalb des elastischen Dichtelements und/oder ungleichmäßige Dehnung des elastischen Dichtelements vermieden werden.

Die Markierung kann derart angeordnet sein, dass die Markierung für einen Benutzer bei einem Betrachten der Anschlussseite erkennbar ist. Die Markierung kann dazu dienen, das elastische Dichtelement relativ zu der Grundplatte in einer Soll-Ausrichtung zu positionieren.

Die Grundplatte kann eine zu der Markierung des Dichtelements korrespondierende Markierung aufweisen. Das Dichtelement kann relativ zu der Grundplatte ausgerichtet sein, wenn die Markierung des Dichtelements in Übereinstimmung mit der Markierung der Grundplatte gebracht ist.

In einer Weiterbildung des Sauggreifers weist das elastische Dichtelement eine Anzahl, beispielsweise 4, 8 oder 10, von Vorsprüngen auf. Die Anzahl von Vorsprüngen sind dazu ausgebildet, ein vollständiges Komprimieren der Faltenbalg-Struktur zu verhindern. Wenn die Faltenbalg-Struktur vollständig komprimiert ist, können zwei aneinanderliegende Segmente der Faltenbalg-Struktur aneinanderhaften, weshalb die Faltenbalg-Struktur sich nicht mehr selbstständig entfalten kann. Deshalb können die Vorsprünge eine Funktionstüchtigkeit der Faltenbalg-Struktur sicherstellen.

In einer Weiterbildung des Sauggreifers ist zumindest einer der Vorsprünge für das Ausrichten des elastischen Dichtelements relativ zu der Grundplatte geeignet. Vorteilhafterweise kann dadurch zumindest einer der Vorsprünge eine Doppelfunktion erfüllen, nämlich das Verhindern des vollständigen Komprimierens der Faltenbalg-Struktur und das Verwenden als Markierung für das Ausrichten des elastischen Dichtelements relativ zu der Grundplatte.

Der zumindest eine Vorsprung kann derart angeordnet sein, dass der Vorsprung für einen Benutzer bei einem Betrachten der Saugseite erkennbar ist. Zumindest der einen Vorsprung kann dazu dienen, das elastische Dichtelement relativ zu der Grundplatte in einer Soll-Ausrichtung zu positionieren.

In einer Weiterbildung des Sauggreifers ist das elastische Dichtelement aus einem Silikonmaterial oder aus einem Gummimaterial, insbesondere aus Silikon oder aus Gummi, gebildet. Derartige Materialien können für das Kontaktieren von Gegenständen mit rauen Oberflächen besonders geeignet sein. Insbesondere kann dadurch ein Verschleiß des elastischen Dichtelements reduziert werden. Das elastische Dichtelement kann aus einem Vollgummimaterial gebildet sein.

In einer Weiterbildung des Sauggreifers weist das elastische Dichtelement zwei Dichtkanten auf. Die beiden Dichtkanten sind dazu ausgebildet, den Gegenstand während dem Ansaugen zu kontaktieren. Vorteilhafterweise kann mittels den Dichtkanten eine Abdichtung zwischen dem Gegenstand und dem elastischen Dichtelement weiter verbessert werden, wenn der Gegenstand angesaugt wird.

Falls während dem Ansaugen des Gegenstands das elastische Dichtelement lokal unterschiedlich stark komprimiert ist, kann durch das Vorsehen von zwei Dichtkanten ein zuverlässiges Abdichten sichergestellt werden. Insbesondere kann durch die beiden Dichtkanten eine geschlossene Dichtlinie gebildet werden, auch wenn das elastische Dichtelement lokal unterschiedlich stark komprimiert ist.

In einer Weiterbildung des Sauggreifers weist das elastische Dichtelement eine Dichtlippe für das Erleichtern des Ansaugens des Gegenstands auf. Die Dichtlippe kann den Gegenstand vor dem Beaufschlagen des Sauggreifers mit Unterdruck kontaktieren und abschnittsweise gegenüber der Umgebung abdichten. Dadurch kann die Dichtlippe das Ansaugen des Gegenstands erleichtern.

In einer Weiterbildung des Sauggreifers weist die Klemm-Einrichtung eine Anzahl von Klemm-Elementen auf. Das elastische Dichtelement ist mittels der Anzahl von Klemm-Elementen an der Grundplatte befestigt. Vorteilhafterweise kann an Stellen, die während einen Betrieb des Sauggreifers stark belastet sind, ein Klemm-Element angeordnet sein. Dadurch kann das elastische Dichtelement besonders sicher an der Grundplatte befestigt sein.

Ein Wert der Anzahl von Klemm-Elementen kann in einem Bereich von 5 bis 100 liegen. Jedes Klemm-Element kann als Klammer ausgebildet sein. Jedes Klemm-Element kann das elastische Dichtelement abschnittsweise umgreifen. Das elastische Dichtelement kann mittels der Anzahl von Klemm-Elementen gegen die Grundplatte gedrückt sein.

In dem geklemmten Zustand der Klemm-Einrichtung können die Klemm-Elemente an der Grundplatte befestigt sein. Die Klemm-Elemente können an der Anschlussseite der Grundplatte befestigt sein. In dem gelösten Zustand der Klemm-Einrichtung können die Klemm-Elemente nicht an der Grundplatte befestigt sein.

Die Klemm-Einrichtung kann eine Anzahl von Schrauben aufweisen. Ein Wert der Anzahl von Schrauben kann in einem Bereich von 5 bis 100 liegen. Die Klemm-Elemente können mittels den Schrauben an der Grundplatte befestigt sein.

In einer Weiterbildung des Sauggreifers weist jedes Klemm-Element einen ersten Kontaktabschnitt und einem zweiten Kontaktabschnitt für das Kontaktieren des elastischen Dichtelements auf. Der erste Kontaktabschnitt jedes Klemm-Elements ist orthogonal zu dem zweiten Kontaktabschnitt ausgerichtet. Dadurch kann das elastische Dichtelement besonders sicher an der Grundplatte befestigt sein. Insbesondere kann dadurch besonders zuverlässig ein ungewolltes Lösen des elastischen Dichtelements von der Grundplatte verhindert werden.

Der erste Kontaktabschnitt kann sich an dem zweiten Kontaktabschnitt anschließen.

In einer Weiterbildung des Sauggreifers weist jedes Klemm-Element eine Stufe auf. Jedes Klemm-Element weist einen Grundplatten-Kontaktabschnitt für das Kontaktieren der Grundplatte und einen Klemmabschnitt für das Klemmen des elastischen Dichtelements auf. Die Stufe ist zwischen dem Grundplatten-Kontaktabschnitt und dem Klemmabschnitt angeordnet. Dadurch kann ein Höhenunterschied zwischen der Grundplatte und dem elastischen Dichtelement mittels der Stufe ausgeglichen werden. Der Grundplatten-Kontaktabschnitt und der Klemmabschnitt können parallel und versetzt zueinander verlaufen.

In einer Weiterbildung des Sauggreifers weist der Sauggreifer eine Anzahl, beispielsweise 3 bis 30, von Anschlagpuffer für das Begrenzen einer Kompression des elastische Dichtelements und/oder für das Vermeiden einer Durchbiegung des Gegenstands, wenn der Gegenstand angesaugt ist, auf. Vorteilhafterweise kann durch das Begrenzen der Kompression des elastischen Dichtelements ein Verschleiß oder eine Beschädigung des elastischen Dichtelements durch übermäßige Kompression reduziert oder verhindert werden, wodurch sich eine Lebensdauer des elastischen Dichtelements verlängert. Zusätzlich oder alternativ kann mittels der Anschlagpuffer eine Beschädigung des Gegenstands aufgrund einer übermäßigen Durchbiegung während dem Ansaugen vermieden werden.

Wenn der Gegenstand angesaugt ist, kann zumindest einer der Anschlagpuffer einen berührenden Kontakt zu dem Gegenstand ausbilden.

Mittels den Anschlagpuffern kann die Kompression des elastischen Dichtelements auf einen maximalen Soll-Wert begrenzt werden. Die Anschlagpuffer können an der Saugseite der Grundplatte angeordnet sein. Die Anschlagpuffer können an der Grundplatte und/oder an der Klemm-Einrichtung, insbesondere mittels einer Schraubverbindung oder einer Klebeverbindung, befestigt sein.

Anders formuliert, die Anschlagpuffer können in dem Saugraum des Sauggreifers angeordnet sein. Dadurch kann der Gegenstand, der gegen die Anschlagpuffer gesaugt wird, das elastische Dichtelement nicht weiter Komprimieren, weshalb eine übermäßige Kompression des elastischen Dichtelements verhindert wird. Gleichzeitig können die Anschlagpuffer derart in dem Saugraum des Sauggreifers verteilt sein, dass eine Durchbiegung des Gegenstands vermieden wird.

Die Anschlagpuffer können aus einem Silikonmaterial oder aus einem Gummimaterial gebildet sein. Die Anschlagpuffer können aus einem Vollgummimaterial gebildet sein. Die Anschlagpuffer und das elastische Dichtelement können materialeinheitlich ausgebildet sein.

In einer Weiterbildung des Sauggreifers weist die Grundplatte eine Saugseite auf, die dem Gegenstand zugewandt ist, wenn der Gegenstand angesaugt ist. Ein erster Bereich der Saugseite, der von dem elastischen Dichtelement überdeckt ist, ist kleiner als ein zweiter Bereich der Saugseite, der von dem elastischen Dichtelement nicht überdeckt ist. Vorteilhafterweise kann dadurch das elastische Dichtelement aufgrund von Materialeinsparungen kostengünstig ausgebildet werden.

Insbesondere kann ein Flächeninhalt der von dem elastischen Dichtelement überdeckten Fläche der Saugseite der Grundplatte kleiner sein als ein Flächeninhalt der von dem elastischen Dichtelement nicht überdeckten Fläche der Saugseite der Grundplatte.

Der zweite Bereich kann mindestens um das Dreifache, das Fünffache oder das Zehnfache größer sein als der erste Bereich. Der erste Bereich und/oder der zweite Bereich können jeweils ein Flächenabschnitt der Grundplatte sein.

Die Grundplatte kann auf der Anschlussseite einen dritten Bereich, in dem die Grundplatte von dem elastischen Dichtelement überdeckt ist, und einen vierten Bereich, in dem die Grundplatte von dem elastischen Dichtelement nicht überdeckt ist, aufweisen. Der dritte Bereich kann kleiner sein als der vierte Bereich.

Insbesondere kann ein Flächeninhalt der von dem elastischen Dichtelement überdeckten Fläche der Anschlussseite der Grundplatte kleiner sein als ein Flächeninhalt der von dem elastischen Dichtelement nicht überdeckten Fläche der Anschlussseite der Grundplatte.

Der vierte Bereich kann mindestens um das Dreifache, das Fünffache oder das Zehnfache größer sein als der dritte Bereich. Der dritte Bereich und/oder der vierte Bereich können jeweils ein Flächenabschnitt der Grundplatte sein.

Ein erfindungsgemäßes Verfahren dient zum Austauschen eines elastischen Dichtelements eines zuvor beschriebenen Sauggreifers. Das elastische Dichtelement kann, beispielsweise aufgrund von Verschleiß oder einer Beschädigung, defekt sein. Das Verfahren weist auf: Überführen der Klemm-Einrichtung in den gelösten Zustand, wobei in dem gelösten Zustand das elastische Dichtelement mittels der Klemm-Einrichtung nicht an der Grundplatte befestigt ist; Entfernen des, insbesondere defekten, elastischen Dichtelements von der Grundplatte; Anordnen eines weiteren elastischen Dichtelements an der Grundplatte, wobei das weitere elastische Dichtelement defektfrei ist; und Überführen der Klemm-Einrichtung in den geklemmten Zustand, wobei in dem geklemmten Zustand das weitere elastische Dichtelement mittels der Klemm-Einrichtung an der Grundplatte befestigt ist.

Das elastische Dichtelement und das weitere elastische Dichtelement können baugleich sein. Die zuvor gemachte Beschreibung des elastischen Dichtelements kann auch für das weitere elastische Dichtelement gelten.

Ein erfindungsgemäßes Verfahren dient zum Herstellen eines Rotorblatts einer Windkraftanlage. Das Verfahren weist auf: Greifen eines Elements des Rotorblatts der Windkraftanlage mit einer Anzahl, beispielsweise 5, 8 oder 10, von zuvor beschriebenen Sauggreifern durch Ansaugen des Elements des Rotorblatts mittels der Anzahl von Sauggreifern, insbesondere während des Herstellens des Rotorblatts.

Anders formuliert, dadurch kann der zuvor beschriebene Sauggreifer für das Herstellen des Rotorblatts der Windkraftanlage verwendet werden. Eine Verwendung des zuvor beschriebenen Sauggreifers kann eine Verwendung für das Herstellen des Rotorblatts der Windkraftanlage sein.

Weitere Vorteile und vorteilhafte Ausgestaltungen der Erfindung sind den Figuren, deren Beschreibung und den Ansprüchen entnehmbar. Alle in den Figuren, deren Beschreibung und den Ansprüchen offenbarten Merkmale können sowohl einzeln als auch in beliebiger Kombination miteinander erfindungswesentlich sein. Es zeigen:
- Fig. 1: eine schematische Schrägansicht eine Sauggreifers,
- Fig. 2: eine weitere schematische Schrägansicht des Sauggreifers,
- Fig. 3: eine schematische Schrägansicht eines elastischen Dichtelements des Sauggreifers,
- Fig. 4: eine weitere schematische Schrägansicht des elastischen Dichtelements,
- Fig. 5: eine schematische Schnittansicht des elastischen Dichtelement entlang einer Schnittlinie V-V gemäß Fig. 3,
- Fig. 6: eine schematische Schnittansicht des Sauggreifers entlang einer Schnittlinie VI-VI gemäß Fig. 2,
- Fig. 7: eine schematische Schnittansicht des Sauggreifers entlang einer Schnittlinie VII-VII gemäß Fig. 2,
- Fig. 8: eine schematische Schrägansicht des Sauggreifers und eines weiteren Sauggreifers, und
- Fig. 9: eine weitere schematische Schrägansicht der beiden Sauggreifer von Fig. 8.

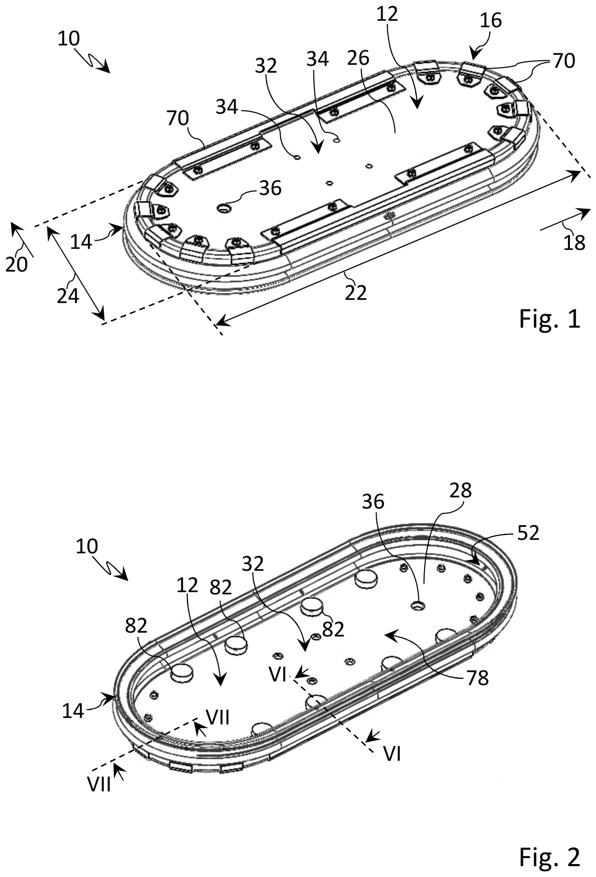

Fig. 1 zeigt einen Sauggreifer 10 von oben und Fig. 2 zeigt den Sauggreifer 10 von unten. Der Sauggreifer 10 ist zum Ansaugen, insbesondere zum Greifen, eines Gegenstands mittels Unterdruck ausgebildet. Der Gegenstand kann eine gewölbte, wellige und raue Oberfläche aufweisen. Insbesondere kann der Gegenstand ein Element eines Rotorblatts einer Windkraftanlage, beispielsweise in Form eines Segments, einer Halbschale, eines Stegs oder einer Versteifungsrippe sein.

Der Sauggreifer 10 hat eine Grundplatte 12, ein elastisches Dichtelement 14 und eine Klemm-Einrichtung 16.

Die Grundplatte 12 dient dazu, dem Sauggreifer 10 Struktur und Stabilität zu verleihen.

Die Grundplatte 12 ist einteilig ausgebildet. Die Grundplatte 12 ist eine Platte. Die Grundplatte 12 ist eine Aluminiumplatte. Denkbar ist aber auch, dass die Grundplatte 12 als eine Stahlplatte ausgebildet ist. Die Grundplatte 12 ist eben ausgebildet. Unter eben ausgebildet kann verstanden werden, dass die Grundplatte 12 keinen Bereich oder Abschnitt mit einem Absatz oder Stufe aufweist.

Die Grundplatte 12 erstreckt sich in eine Längsrichtung 18 und in eine Querrichtung 20. Die Grundplatte 12 hat in Längsrichtung 18 eine Länge 22 mit einem Betrag in einem Bereich von 40 cm bis 80 cm und in Querrichtung 20 eine Breite 24 mit einem Betrag in einem Bereich von 10 cm bis 60 cm. Die Länge 22 ist in ihrem Betrag größer als ein Betrag der Breite 24. Die Grundplatte 12 hat in einer Vertikalrichtung eine Dicke mit einem Betrag von 1 cm. Die Längsrichtung 18, die Querrichtung 20 und die Vertikalrichtung sind jeweils orthogonal zueinander ausgerichtet.

Ein Querschnitt der Grundplatte 12 hat eine rechteckförmige Form. Die Grundplatte 12 ist bezogen auf ihrer Längsachse achsensymmetrisch. Die Grundplatte 12 ist in einer Ebene, die durch die Längsrichtung 18 und Querrichtung 20 aufgespannt ist, stadionförmig. Vorteilhafterweise können durch die stadionförmig ausgebildete Grundplatte 12 Kanten vermieden werden, welche das elastische Dichtelement 14 beschädigen könnten. Unter einer stadionförmigen Form kann ein Rechteck verstanden werden, dessen beiden schmalen Seiten jeweils durch ein Ellipsensegment ersetzt ist. Denkbar ist aber auch, dass die schmalen Seiten jeweils durch einen Halbkreis ersetzt sind.

Die Grundplatte 12 hat eine Anschlussseite 26, die von dem Gegenstand abgewandt ist, wenn der Gegenstand mit dem Sauggreifer 10 angesaugt ist, siehe Fig. 1. Die Grundplatte 12 hat eine zu der Anschlussseite 26 entgegengesetzte Saugseite 28, die dem Gegenstand zugewandt ist, wenn der Gegenstand mit dem Sauggreifer 10 angesaugt ist, siehe Fig. 2. Die Anschlussseite 26 und die Saugseite 28 sind zueinander entgegengesetzte Seiten der Grundplatte 12.

Die Grundplatte 12 hat eine Befestigungs-Schnittstelle 32. Die Befestigungs-Schnittstelle 32 hat vier Bohrungen 34. Die vier Bohrungen 34 können in einem rechteckförmigen Muster angeordnet sein. Mittels der Befestigungs-Schnittstelle 32 kann der Sauggreifer 10 an einem Manipulator, beispielsweise in Form eines Krans oder eines Roboterarms, befestigt werden, insbesondere mittels eines Schraubverbindung. Die Befestigungs-Schnittstelle 32 ist in einer Mitte, insbesondere in einem Schwerpunkt, der Grundplatte 12 angeordnet.

Die Grundplatte 12 hat eine Unterdruck-Schnittstelle 36. Mittels der Unterdruck-Schnittstelle 36 kann der Sauggreifer 10 mit Unterdruck für das Ansaugen des Gegenstands versorgt, insbesondere beaufschlagt, werden. Die Unterdruck-Schnittstelle 36 hat eine Gewindebohrung. Ein Unterdruck-Schlauch kann für die Versorgung des Sauggreifers 10 mit Unterdruck mittels eines Verbindungselements, insbesondere in Form einer Schlauchtülle, an der Gewindebohrung an der Anschlussseite 26 angeschlossen werden.

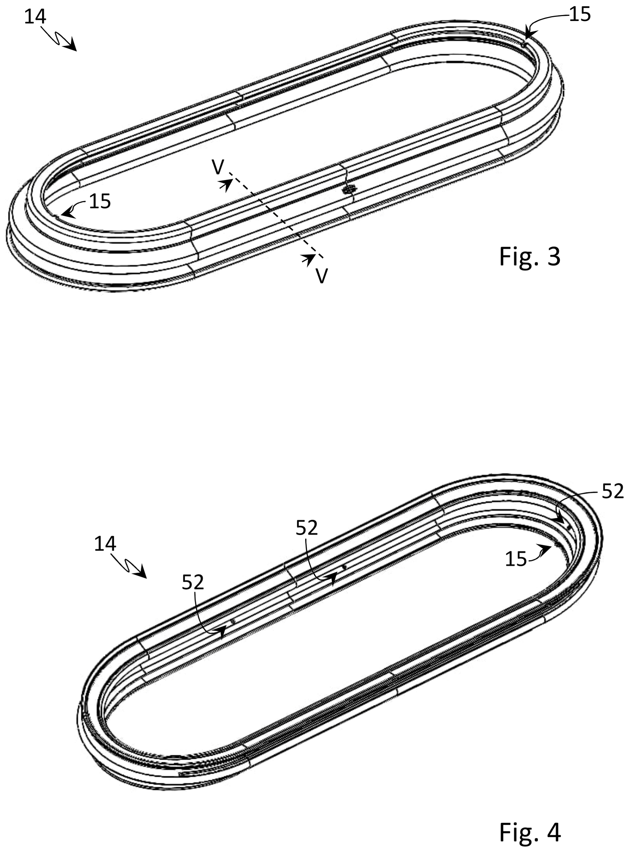

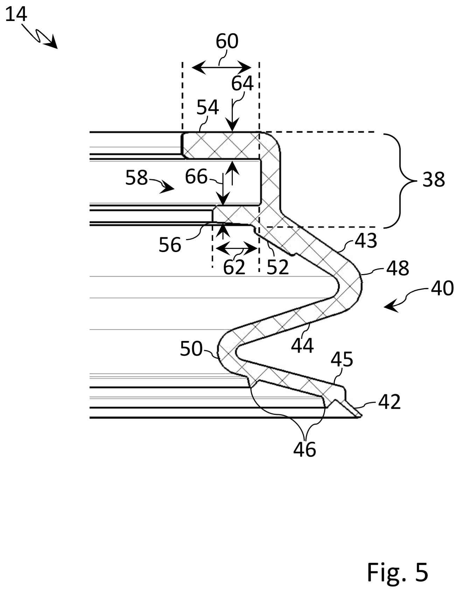

Das elastische Dichtelement 14 ist in Fig. 3 von oben und in Fig. 4 von unten dargestellt. Zusätzlich ist in Fig. 5 ein Querschnittsprofil des elastischen Dichtelements 14 entlang einer Schnittlinie V-V gemäß Fig. 3 dargestellt. Die Grundplatte 12 und das elastische Dichtelement 14 sind zwei voneinander getrennte, insbesondere separate, ausgebildete Bauteile.

Das elastische Dichtelement 14 ist einteilig ausgebildet. Das elastische Dichtelement 14 ist schlaufenförmig ausgebildet. Das elastische Dichtelement 14 ist stadionförmig. Eine Form der Grundplatte 12 und eine Form des elastischen Dichtelements 14 sind gleich.

Das elastische Dichtelement 14 ist aus einem Vollgummimaterial gebildet. Dadurch ist das elastische Dichtelement 14 dehnbar und strauchbar ausgebildet. Denkbar ist aber auch, dass das elastische Dichtelement 14 aus einem Silikonmaterial gebildet ist. Das elastische Dichtelement 14 ist nahtlos ausgebildet.

Das elastische Dichtelement 14 hat einen Befestigungsabschnitt 38, eine Faltenbalg-Struktur 40 und eine Dichtlippe 42, siehe Fig. 5.

Die Dichtlippe 42 ist als Fortsatz ausgebildet. Die Dichtlippe 42 bildet ein freies Ende des elastischen Dichtelements 14. Die Dichtlippe 42 dient dazu, den Gegenstand zu kontaktieren, das Ansaugen des Gegenstands zu erleichtern und das Risiko von Leckagen zu reduzieren. Insbesondere kann für das Ansaugen des Gegenstands der Sauggreifer 10 an dem Gegenstand unter Ausbildung eines berührenden Kontakts zwischen der Dichtlippe 42 und dem Gegenstand angeordnet werden. Dadurch kann die Dichtlippe 42 den Gegenstand abschnittsweise gegenüber der Umgebung abdichten.

Das elastische Dichtelement 14 hat zwei Dichtkanten 46 für das Kontaktieren des Gegenstands. Während dem Ansaugen kann mindestens eine der beiden Dichtkanten 46 den Gegenstand kontaktieren. Dadurch kann eine sichere und zuverlässige Abdichtung zwischen dem elastischen Dichtelement 14 und dem Gegenstand gegenüber der Umgebung hergestellt werden, wenn der Gegenstand angesaugt ist. Die beiden Dichtkanten 46 sind in ihrem Querschnitt jeweils dreiecksförmig ausgebildet.

Beispielsweise kann für das Ansaugen des Gegenstands der Sauggreifer 10 derart an dem Gegenstand angeordnet werden, dass die Dichtlippe 42 den Gegenstand kontaktiert und abschnittsweise gegenüber der Umgebung abdichtet. Anschließend kann der Sauggreifer 10 mit Unterdruck beaufschlagt werden. Der Gegenstand wird gegen das elastische Dichtelement 14 gesaugt, so dass mindestens einer der beiden Dichtkanten 46 den Gegenstand kontaktieren und den Gegenstand zusätzlich abschnittsweise gegenüber der Umgebung abdichten.

Die Faltenbalg-Struktur 40 ist zwischen der Dichtlippe 42 und dem Befestigungsabschnitt 38 angeordnet. Die Faltenbalg-Struktur 40 dient zum elastischen Anpassen des elastischen Dichtelements 14 an Wellen, Krümmungen oder Unebenheiten des Gegenstands. Die Faltenbalg-Struktur 40 hat ein erstes Segment 43, ein zweites Segment 44 um ein drittes Segment 45. An dem dritten Segment 45 sind die Dichtlippe 42 und die beiden Dichtkanten 46 angeordnet.

Das erste Segment 43 und das zweite Segment 44 sind unter Bildung einer ersten Falte 48 miteinander verbunden. Das zweite Segment 44 und das dritte Segment 45 sind unter Bildung einer zweiten Falte 50 miteinander verbunden. In dem dargestellten Ausführungsbeispiel ist die erste Falte 48 eine Außenfalte und die zweite Falte 50 eine Innenfalte.

Die erste Falte 48 und die zweite Falte 50 sind einander entgegengesetzt ausgerichtet. Durch die beiden Falten 48, 50 hat die Faltenbalg-Struktur 40 eine akkordeon-ähnliche Form. Die beiden Falten 48, 50 können sich bei Bedarf ausdehnen oder zusammenziehen, wodurch die Anpassung des elastischen Dichtelements 14 an Wellen, Krümmungen oder Unebenheiten des Gegenstands erreicht wird. Die beiden Falten 48, 50 verlaufen derart, dass die Faltenbalg-Struktur 40 in einer Richtung senkrecht zur Grundplatte 12 komprimierbar ist.

Wenn der Sauggreifer 10 den Gegenstand angesaugt, wird der Gegenstand gegen das elastische Dichtelement 14 gedrückt und die Faltenbalg-Struktur 40 wird durch den Gegenstand komprimiert.

Die Faltenbalg-Struktur 40 hat eine Anzahl von Vorsprüngen 52. Die Vorsprünge 52 sind an dem ersten Segment 43 angeordnet. Die Vorsprünge 52 sind dazu ausgebildet, eine vollständige Kompression der Faltenbalg-Struktur 40 zu verhindern. Insbesondere verhindern die Vorsprünge 52, dass das zweite Segment 44 während dem Ansaugen des Gegenstands flächig gegen das erste Segment 43 anliegt. Dadurch wird ein Anhaften des zweiten Segments 44 an dem ersten Segment 43 nach dem Ansaugen des Gegenstands verhindert. Anders formuliert, die Vorsprünge 52 stellen ein automatisches, insbesondere selbstständiges, Entfalten der Faltenbalg-Struktur 40 nach einem Ansaugen des Gegenstands sicher.

Der Befestigungsabschnitt 38 wird durch einen ersten Steg 54 und einem zweiten Steg 56, die zwischen sich eine Vertiefung 58 ausbilden, gebildet. Der ersten Steg 54 und der zweiten Steg 56 verlaufen parallel zueinander. Insbesondere erstrecken sich die beiden Stege 54, 56 in Richtung der Mitte, insbesondere in Richtung des Schwerpunkts des elastischen Dichtelements 14. Ein Betrag einer Länge 60 des ersten Stegs 54 ist größer als ein Betrag einer Länge 62 des zweiten Stegs 56. Ein Betrag einer Dicke 64 des ersten Stegs 54 ist größer als ein Betrag einer Dicke 66 des zweiten Stegs 56. Dadurch wird ein Einsetzen der Grundplatte 12 in die Vertiefung 58 erleichtert.

Die Vertiefung 58 ist nuten-förmig ausgebildet. Die Vertiefung 58 ist in ihrem Querschnitt rechteckförmig ausgebildet. Die Vertiefung 58 ist umlaufend ausgebildet. Die Vertiefung 58 dient dazu, die Grundplatte 12, insbesondere ein Rand der Grundplatte 12, aufzunehmen. Die Vertiefung 58 kann als Aufnahmeraum für das Aufnehmen der Grundplatte 12 dienen.

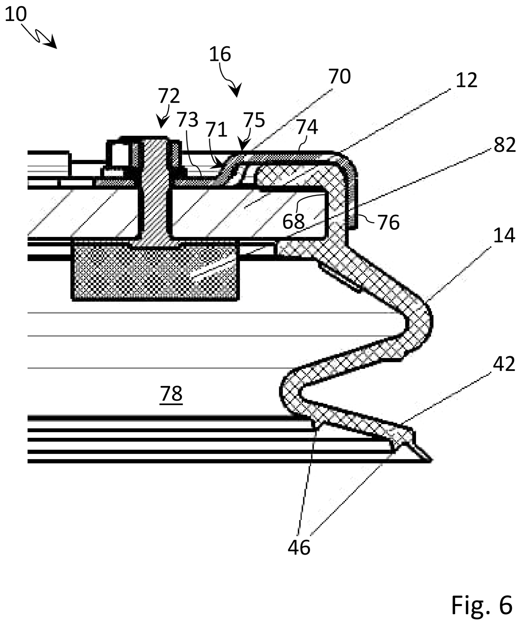

Fig. 6 zeigt eine Schnittansicht des Sauggreifers 10 entlang einer Schnittlinie VI-VI gemäß Fig. 2. Das elastische Dichtelement 14 ist unmittelbar an der Grundplatte 12 angeordnet. Das elastische Dichtelement 14 ist an dem Rand 68 der Grundplatte 12 umlaufend angeordnet. Der Rand 68 ist in die Vertiefung 58 eingesetzt. Insbesondere ist der Rand 68 an einem Grund der Vertiefung 58 angeordnet. Die Grundplatte 12 ist derart in die Vertiefung 58 eingesetzt, dass der erste Steg 54 an der Anschlussseite 26 und der zweite Steg 56 an der Saugseite 28 angeordnet ist. Dadurch ist ein Abschnitt der Grundplatte 12 zwischen den beiden Stegen 54, 56 angeordnet.

Die Saugseite 28 ist in einem ersten Bereich durch den zweiten Steg 56 überdeckt und die Saugseite 28 ist in einem zweiten Bereich durch den zweiten Steg 56 nicht überdeckt. Der erste Bereich ist kleiner als der zweite Bereich.

Die Anschlussseite 26 ist in einem dritten Bereich durch den ersten Steg 54 überdeckt und in einem vierten Bereich durch den ersten Steg 54 nicht überdeckt. Der dritte Bereich ist kleiner als der vierte Bereich. Der dritte Bereich ist größer als der erste Bereich.

Das elastische Dichtelement 14 ist mittels der Klemm-Einrichtung 16 lösbar an der Grundplatte 12 befestigt. Anders formuliert, die Klemm-Einrichtung 16 hat einen geklemmten Zustand und einem gelösten Zustand. Der geklemmte Zustand ist in Fig. 1, 2 und 6 dargestellt. In dem geklemmten Zustand ist das elastische Dichtelement 14 an der Grundplatte 12 befestigt.

Die Klemm-Einrichtung 16 hat eine Mehrzahl von Klemmen-Elementen 70 in Form von Klammern, siehe Fig. 1 und 6. Jedes Klemm-Element 70 ist aus einem gebogenen Blech gebildet. Jedes Klemm-Element 70 hatte eine Stufe 71. Jede Stufe 71 ist zwischen einem Grundplatten-Kontaktabschnitt 73 des Klemm-Elements 70 und einem Klemmabschnitt 75 des Klemm-Elements 70 angeordnet. Fig. 6 zeigt, dass in dem geklemmten Zustand der Grundplatten-Kontaktabschnitt 73 die Grundplatte 12 kontaktiert und dass der Klemmabschnitt 75 das elastische Dichtelement 14 an der Grundplatte 12 mittels einer Klemm-Verbindung befestigt. Eine Höhe der Stufe 71 ist gleich der Dicke 64 des ersten Stegs 54. Dadurch wird mittels der Stufe 71 ein Höhenunterschied zwischen der Grundplatte 12 und dem an der Grundplatte 12 angeordneten elastischen Dichtelement 14 überbrückt, so dass das Klemm-Element 70 das elastische Dichtelement 14 abschnittsweise umgreift.

Die Klemm-Elemente 70 sind mittels Schraubverbindungen 72 an der Grundplatte 12 befestigt. Durch die Schraubverbindungen 72 werden die Klemm-Elemente 70 gegen das elastische Dichtelement 14 gedrückt, wodurch das elastische Dichtelement 14 gegen die Grundplatte 12 gedrückt wird. Jedes Klemm-Element 70 drückt gegen den ersten Steg 54. Anders formuliert, der erste Steg 54 ist zwischen der Klemm-Einrichtung 16 und der Grundplatte 12 angeordnet, insbesondere eingeklemmt.

Jedes Klemm-Element 70 umgreift das elastische Dichtelement 14 abschnittsweise. Jedes Klemm-Element 70, insbesondere jeder Klemmabschnitt 75, hat einen ersten Kontaktabschnitt 74 und einen zweiten Kontaktabschnitt 76 für das Kontaktieren des elastischen Dichtelements 14. Der erste Kontaktabschnitt 74 schließt sich, insbesondere unmittelbar, an dem zweiten Kontaktabschnitt 76 an. Der erste Kontaktabschnitt 74 ist orthogonal zu dem zweiten Kontaktabschnitt 76 ausgerichtet. Der zweite Kontaktabschnitt 76 bildet ein freies Ende des Klemm-Elements 70.

Der erste Kontaktabschnitt 74 kontaktiert den ersten Steg 54. Der zweite Kontaktabschnitt 76 kontaktiert einen Abschnitt des elastischen Dichtelements 14, der zwischen dem ersten Steg 54 und dem zweiten Steg 56 angeordnet ist. Der zweite Kontaktabschnitt 76 sichert das elastische Dichtelement 14 an der Grundplatte. Der zweite Kontaktabschnitt 76 verhindert ein ungewolltes Entnehmen der Grundplatte 12 aus der Vertiefung 58.

Dadurch ist das elastische Dichtelement 14 mittels der Klemm-Einrichtung 16 unter Ausbildung einer formschlüssigen Verbindung an der Grundplatte 12 befestigt.

In dem gelösten Zustand der Klemm-Einrichtung 16 sind die Schraubverbindungen 72 derart gelöst, dass die Klemm-Elemente 70 das elastische Dichtelement 14 nicht mehr an der Grundplatte 12 befestigen. Dadurch kann das elastische Dichtelement 14 von der Grundplatte 12 entfernt werden. Dadurch ist das elastische Dichtelement 12 mittels der Klemm-Einrichtung 16 austauschbar an der Grundplatte 16 befestigt.

Der Sauggreifer 10 kann dadurch hergestellt werden, dass die Klemm-Einrichtung 16 in den gelösten Zustand überführt wird, das elastische Dichtelement 14 an der Grundplatte 12 durch Einsetzen der Grundplatte 12 in die Vertiefung 58 angeordnet wird und die Klemm-Einrichtung 16 in den geklemmten Zustand überführt wird.

Das elastische Dichtelement 14 hat zwei Markierungen 15 für das Ausrichten des elastischen Dichtelements 14 relativ zu der Grundplatte 12 während des Einsetzens der Grundplatte 12 in die Vertiefung 58, siehe Fig. 3. Die beiden Markierungen 15 sind jeweils als ein dreieckförmiger Vorsprung ausgebildet. Die beiden Markierungen 15 sind derart an dem elastischen Dichtelement 14 angeordnet, dass ein Benutzer die beiden Markierungen 15 erkennen kann, wenn die Klemm-Einrichtung 16 den gelösten Zustand aufweist und der Benutzer auf die Anschlussseite 26 blickt.

Das Ausrichten des elastischen Dichtelements 14 relativ zu der Grundplatte 12 erfolgt durch das Richten der beiden Markierungen 15 jeweils auf ein Gewinde der Schraubverbindungen 72. Durch das Ausrichten des elastischen Dichtelements 14 relativ zu der Grundplatte 12 anhand den beiden Markierungen 15 wird die Stadionform des elastischen Dichtelements 14 und die Stadionform der Grundplatte 12 zentrisch zueinander ausgerichtet. Dadurch wird eine ungleichmäßige Spannungsverteilung innerhalb des elastischen Dichtelements 14 und eine ungleichmäßige Dehnung des elastischen Dichtelements 14 aufgrund von nicht zentrisch zueinander ausgerichteten Formen von Grundplatte 12 und elastischen Dichtelement 14 vermieden.

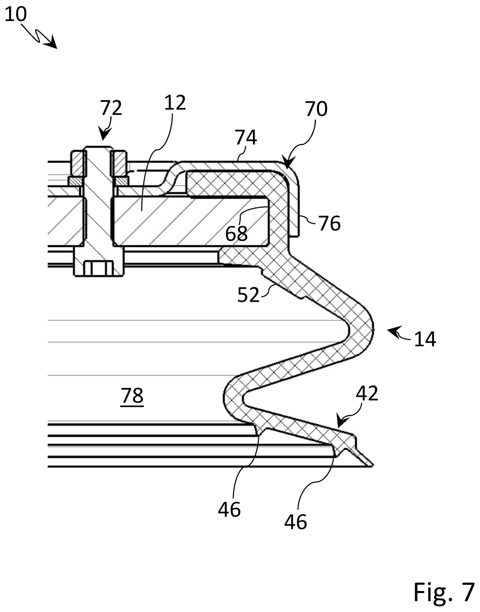

Weiter sind zwei der Vorsprünge 52 derart angeordnet, dass jeder der beiden Vorsprünge 52 eine Position einer der beiden Markierungen 15 markiert. Beispielsweise ist in Fig. 4 einer der beiden Vorsprünge 52 dargestellt, der die Position einer der beiden Markierungen 15 markiert. Dadurch sind zumindest zwei der Vorsprünge 52 für das Ausrichten des elastischen Dichtelements relativ zu der Grundplatte geeignet. Die beiden Vorsprünge 52 ermöglichen einem Benutzer das elastische Dichtelement 14 relativ zu der Grundplatte 12 auszurichten, wenn der Benutzer auf die Saugseite 28 blickt und deshalb die beiden Markierungen 15 nicht betrachten kann. Fig. 7 zeigt eine Schnittansicht des Sauggreifers 10 entlang einer Schnittlinie VII-VII gemäß Fig. 2, wobei die Schnittlinie VII-VII durch einen der beiden Vorsprünge 52 verläuft, der die Position einer der beiden Markierungen 15 markiert.

Ein Austauschen des elastischen Dichtelements 14, insbesondere falls das elastische Dichtelement 14 defekt oder beschädigt ist, kann dadurch erfolgen, dass die Klemm-Einrichtung 16 in den gelösten Zustand überführt wird, das elastische Dichtelement 14 von der Grundplatte 12 entfernt wird, ein weiteres elastische Dichtelement an der Grundplatte 12 angeordnet wird und die Klemm-Einrichtung 16 in den geklemmten Zustand zum Zweck des Befestigens des weiteren elastischen Dichtelements an der Grundplatte 12 überführt wird. Das elastische Dichtelement 14 und das weitere elastische Dichtelement können baugleich ausgebildet sein.

Fig. 2, 6 und 7 zeigen jeweils, dass das Sauggreifer 10 eine Saugraum 78 hat. Der Saugraum 78 ist von dem elastischen Dichtelement 14 und der Grundplatte 12 begrenzt. Die Unterdruck-Schnittstelle 36 mündet in dem Saugraum 78. Der Saugraum 78 ist über die Unterdruck-Schnittstelle 36 mit Unterdruck beaufschlagbar.

Zum Ansaugen des Gegenstands wird der zu greifende Gegenstand an dem elastischen Dichtelement 14 angeordnet. Der Gegenstand verschließt den Saugraum 78. Das elastische Dichtelement 14 kontaktiert den Gegenstand und dichtet den Saugraum 78 gegenüber einer Umgebung des Sauggreifers 10 ab. Anschließend wird der Saugraum 78 über die Unterdruck-Schnittstelle 36 mit Unterdruck beaufschlagt. Durch den Unterdruck wird der Gegenstand in Richtung der Grundplatte 12 gegen das elastische Dichtelement 14 gepresst. Der Gegenstand ist dann angesaugt, wenn die Saugkraft, mit der der Gegenstand gegen das elastische Dichtelement 14 gepresst wird, größer als ein vorgegebener Wert ist.

Zum Freigeben des angesaugten Gegenstands wird der Saugraum 78 mit einem Druck beaufschlagt, der nicht mehr ausreichend ist, um den Gegenstand mit einer Saugkraft gegen das elastische Dichtelement 14 zu pressen, die den vorgegebenen Wert aufweist. Der Gegenstand kann von dem Sauggreifer 10 gelöst werden, wenn die Saugkraft einen Wert aufweisen, der geringer als der vorgegebene Wert ist.

Fig. 2 und 6 zeigen, dass der Sauggreifer 10 eine Mehrzahl von Anschlagpuffer 82 aufweist. Die Anschlagpuffer 82 und das elastische Dichtelement 14 sind materialeinheitlich ausgebildet. Die Anschlagpuffer 82 sind innerhalb des Saugraums 78 angeordnet. In dem dargestellten Ausführungsbeispiel ist jeder Anschlagpuffer 82 an einem Schraubenkopf der Schraubverbindungen 72 befestigt, siehe Fig. 6.

Beispielsweise kann eine Schraubverbindung 72 durch eine Schraube und eine Mutter gebildet werden. An dem Schraubenkopf der Schraube kann ein Anschlagpuffer 82 befestigt sein. Um die Schraubverbindung 72 herzustellen kann die Mutter auf das Gewinde der Schraube in Richtung auf die Anschlussseite 26 zu geschraubt werden.

Die Anschlagpuffer 82 dienen dazu, eine ungewünschte Durchbiegung des angesaugten Gegenstands zu vermeiden, wodurch der Gegenstand vor Beschädigung geschützt ist.

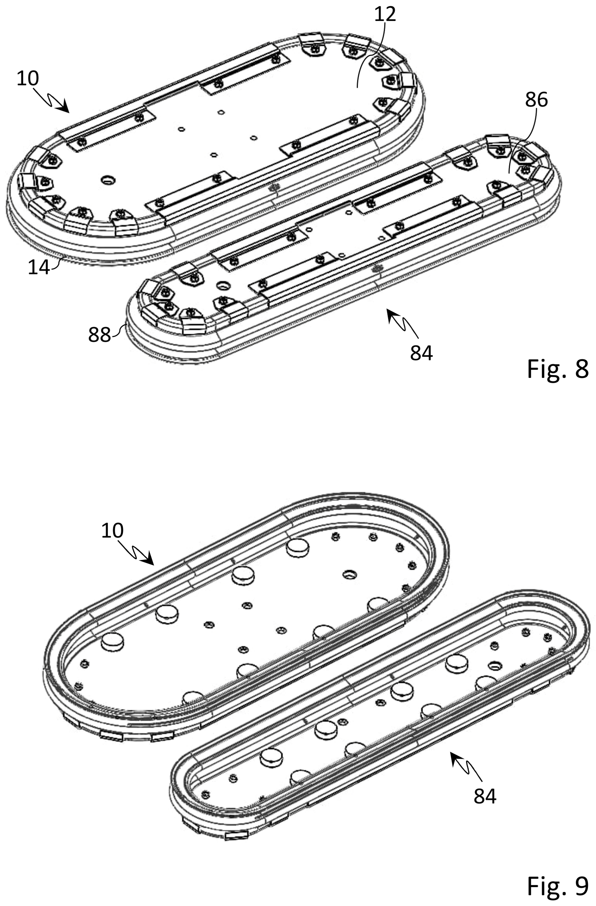

Fig. 8 und 9 zeigen jeweils den Sauggreifer 10 und einen weiteren Sauggreifer 84. Der Sauggreifer 10 und der weitere Sauggreifer 84 unterscheiden sich in ihren Grundplatten 12, 86 voneinander. Die Grundplatte 12 des Sauggreifers 10 hat eine kürzere Länge 22 und eine größere Breite 24 als die Grundplatte 86 des weiteren Sauggreifers 84. Ein Betrag eines Umfangs der Grundplatte 12 des Sauggreifers 10 und ein Betrag eines Umfangs der Grundplatte 86 des weiteren Sauggreifers 84 sind gleich. Die Dicke der Grundplatte 12 des Sauggreifers 10 und eine Dicke der Grundplatte 86 des weiteren Sauggreifers 84 sind gleich.

Das elastische Dichtelement 14 des Sauggreifers 10 und ein elastisches Dichtelement 88 des weiteren Sauggreifers 84 sind baugleich. Anders formuliert, das elastische Dichtelement 14 kann an der Grundplatte 12 des Sauggreifers 10 oder an der Grundplatte 86 des weiteren Sauggreifers 84 befestigt werden. Dadurch kann das elastische Dichtelement 14 an Grundplatten 12, 86, die einen gleichen Umfang aufweisen und sich in ihrer Form voneinander unterscheiden, befestigt werden.

## Patentansprüche

1. Sauggreifer (10) zum Ansaugen eines Gegenstands mittels Unterdruck, aufweisend:
- eine, insbesondere ebene, Grundplatte (12),
- ein elastisches Dichtelement (14), das schlaufenförmig ausgebildet ist, und
- eine Klemm-Einrichtung (16),
- wobei das elastische Dichtelement (14) mittels der Klemm-Einrichtung (16) lösbar an der Grundplatte (12) befestigt ist,
- wobei das elastische Dichtelement (14) eine Faltenbalg-Struktur (40) aufweist,
- wobei die Faltenbalg-Struktur (40) dazu ausgebildet ist, beim Ansaugen des Gegenstands komprimiert zu werden.

2. Sauggreifer (10) nach Anspruch 1,
- wobei das elastische Dichtelement (14) nahtlos ausgebildet ist.

3. Sauggreifer (10) nach einem der voranstehenden Ansprüche,
- wobei das elastische Dichtelement (14) eine Markierung (15) für das Ausrichten des elastischen Dichtelements (14) relativ zu der Grundplatte (12) aufweist.

4. Sauggreifer (10) nach einem der voranstehenden Ansprüche,
- wobei das elastische Dichtelement (14) eine Anzahl von Vorsprüngen (52) aufweist,
- wobei die Anzahl von Vorsprüngen (52) dazu ausgebildet sind, ein vollständiges Komprimieren der Faltenbalg-Struktur (40) zu verhindern.

5. Sauggreifer (10) nach Anspruch 4,
- wobei zumindest einer der Vorsprünge (52) für das Ausrichten des elastischen Dichtelements (14) relativ zu der Grundplatte (12) geeignet ist.

6. Sauggreifer (10) nach einem der voranstehenden Ansprüche,
- wobei das elastische Dichtelement (14) aus einem Silikonmaterial oder aus einem Gummimaterial gebildet ist.

7. Sauggreifer (10) nach einem der voranstehenden Ansprüche,
- wobei das elastische Dichtelement (14) zwei Dichtkanten (46) aufweist,
- wobei die beiden Dichtkanten (46) dazu ausgebildet sind, den Gegenstand während dem Ansaugen zu kontaktieren.

8. Sauggreifer (10) nach einem der voranstehenden Ansprüche,
- wobei das elastische Dichtelement (14) eine Dichtlippe (42) aufweist.

9. Sauggreifer (10) nach einem der voranstehenden Ansprüche,
- wobei die Klemm-Einrichtung (16) eine Mehrzahl von Klemm-Elementen (70) aufweist,
- wobei das elastische Dichtelement (14) mittels der Mehrzahl von Klemm-Elementen (70) an der Grundplatte (12) befestigt ist.

10. Sauggreifer (10) nach Anspruch 9,
- wobei jedes Klemm-Element (70) eine Stufe (71) aufweist,
- wobei jedes Klemm-Element (70) einen Grundplatten-Kontaktabschnitt (73) für das Kontaktieren der Grundplatte (12) und einen Klemmabschnitt (75) für das Klemmen des elastischen Dichtelements (14) aufweist,
- wobei die Stufe (71) zwischen dem Grundplatten-Kontaktabschnitt (73) und dem Klemmabschnitt (75) angeordnet ist.

11. Sauggreifer (10) nach Anspruch 9 oder 10,
- wobei jedes Klemm-Element (70) einen ersten Kontaktabschnitt (74) und einem zweiten Kontaktabschnitt (76) für das Kontaktieren des elastischen Dichtelements (14) aufweist,
- wobei der erste Kontaktabschnitt (74) jedes Klemm-Elements (70) orthogonal zu dem zweiten Kontaktabschnitt (76) ausgerichtet ist.

12. Sauggreifer (10) nach einem der voranstehenden Ansprüche,
- wobei der Sauggreifer (10) eine Anzahl von Anschlagpuffer (82) für das Begrenzen einer Kompression des elastische Dichtelements (14) und/oder für das Vermeiden einer Durchbiegung des Gegenstands aufweist.

13. Sauggreifer (10) nach einem der voranstehenden Ansprüche,
- wobei die Grundplatte (12) eine Saugseite (28) aufweist, die dem Gegenstand zugewandt ist, wenn der Gegenstand angesaugt ist,
- wobei ein erster Bereich der Saugseite (28), der von dem elastischen Dichtelement (14) überdeckt ist, kleiner ist als ein zweiter Bereich der Saugseite (28), der von dem elastischen Dichtelement (14) nicht überdeckt ist.

14. Verfahren zum Austauschen eines elastischen Dichtelements (14) eines Sauggreifers (10) nach einem der voranstehenden Ansprüche, wobei das Verfahren aufweist:
- Überführen der Klemm-Einrichtung (16) in einen gelösten Zustand,
- Entfernen des elastischen Dichtelements (14) von der Grundplatte,
- Anordnen eines weiteren elastischen Dichtelements an der Grundplatte (12), und
- Überführen der Klemm-Einrichtung (16) in einen geklemmten Zustand.

15. Verfahren zum Herstellen eines Rotorblatts einer Windkraftanlage, wobei das Verfahren aufweist:
- Greifen eines Elements des Rotorblatts der Windkraftanlage mit einer Anzahl von Sauggreifern (10) nach einem der voranstehenden Ansprüche 1 bis 13 durch Ansaugen des Elements des Rotorblatts mit der Anzahl von Sauggreifern (10).
